# EUROPEAN PATENT SPECIFICATION

(11) **EP 4 564 115 B1**
(45) Date of publication and mention of the grant of the patent: **03.06.2026**
(21) Application number: 23845415.1
(22) Date of filing: 20.07.2023
(51) Int. Cl.: G05D 1/224, G05D 1/244, G05D 1/246, G05D 1/248, G05D 1/622, G05D 1/648, A01D 34/00

(54) **GARDENING TOOL, CONTROL METHOD THEREFOR, AND SYSTEM**
GARTENWERKZEUG, STEUERUNGSVERFAHREN DAFÜR UND SYSTEM
OUTIL DE JARDINAGE, SON PROCÉDÉ DE COMMANDE ET SYSTÈME

(30) Priority: 27.07.2022 CN 202210893501; 29.07.2022 CN 202210913806; 15.08.2022 CN 202210978359; 15.08.2022 CN 202210978357; 16.09.2022 CN 202211133759; 03.11.2022 CN 202211368522; 26.12.2022 CN 202211679782
(43) Date of publication of application: 04.06.2025
(73) Proprietor: Greenworks (Jiangsu) Co., Ltd, Changzhou, Jiangsu 213023 (CN)
(72) Inventor: ZHUANG, Xian, hangzhou, Jiangsu 213023 (CN); WANG, Huage, hangzhou, Jiangsu 213023 (CN); ZHU, Yanliang, hangzhou, Jiangsu 213023 (CN); LI, Zhiyuan, hangzhou, Jiangsu 213023 (CN)
(74) Representative: Bergenstråhle & Partners AB
(86) International application number: PCT/CN2023/108273
(87) International publication number: WO 2024/022204

(56) References cited:
- EP-A1- 4 419 976
- CN-A- 104 391 313
- CN-A- 109 115 223
- CN-A- 112 556 681
- CN-A- 112 731 479
- CN-A- 112 857 368
- US-A1- 2017 347 521
- US-A1- 2018 364 735
- US-B2- 10 139 234

## Description

### TECHNICAL FIELD

The present invention relates to a technical field of garden tools, particular to a garden tool and a control method and a system thereof.

### BACKGROUND

RTK (Real-time kinematic) carrier phase differential technology is a method for real-time processing of the differential carrier phase observations of two measuring stations. The carrier phase collected by the base station is sent to the user receiver to calculate the difference coordinates. RTK is a satellite positioning measurement method that can obtain centimeter-level positioning accuracy in real time in the wild. RTK differential positioning technology has been widely used in various garden tools such as robotic mowers.

When garden tools such as robotic mowers based on satellite signal navigation are working, some satellite navigation shadowed areas (also called satellite signal shadowed areas) where satellite signals are poor or easily lost will be formed in the working area of the garden tools due to obstructions such as buildings, roofs, sheds, trees, garden umbrellas, awnings, leaves, etc. in or near the working area. When the garden tool enters the satellite navigation shadowed areas, the position of the garden tool cannot be reliably determined based on the satellite navigation positioning module receiving the satellite signal, thereby affecting the normal operation of the garden tool in the satellite navigation shadowed areas.

EP 4419975 discloses a method for use in a robotic work tool arranged to operate in an operational area. The method comprises determining a location of the robotic work tool utilizing a navigation sensor and determining that a shadowed area is encountered, in which navigation utilizing the navigation sensor is not reliable; and in response thereto navigating utilizing a distance sensor based on detecting at least one object and a distance to the at least one object utilizing the distance sensor, the stored at least one object and the location of the robotic work tool.

US 2018/0364735 discloses a robotic lawnmower for movable operation within a work area and has a satellite navigation device, a landmark scanner and a controller. The controller causes the robotic lawnmower to movably operate within the work area in a first operating mode based on positions determined from satellite signals received by the satellite navigation device. If the controller determines that a position cannot be reliably determined based on satellite signals the robotic lawnmower is to movably operate within the work area in a second operating mode. In the second operating mode, the controller receives scanning information from said landmark scanner and identifies at least one landmark based on the received scanning information and determines a landmark-based position estimate.

### SUMMARY

The present invention provides a garden tool and a control method and a system thereof, so that the garden tool can be accurately positioned even in a satellite navigation shadowed area as defined by independent claims 1, 13 and 14. Preferred embodiments the invention are defined by the dependent claims 2 to 12.

The garden tool and the control method and the system of the garden tool of the present invention mark the satellite navigation shadowed area and the marker matching area in the working area map of the garden tool, and set the marker matching area around the periphery of the satellite navigation shadowed area. Through setting the marker matching area, when the target marker in the satellite navigation shadowed area is identified by the identification scanning module for positioning, a matching area when identifying the target marker can be narrowed, thereby reducing an amount of calculation and improving positioning accuracy and efficiency.

### BRIEF DESCRIPTION OF THE DRAWINGS

FIG. 1 is a schematic view of RTK differential positioning method.
FIG. 2 is a first structural block view of a mower according to at least one embodiment of the disclosure.
FIG. 3 is a schematic flowchart of the control method of the mower according to at least one embodiment of the disclosure.
FIG. 4 is an arrangement schematic view of a target marker in a satellite navigation shadowed area according to least one embodiment of the disclosure.
FIG. 5 is a schematic view of defining a matching area around the satellite navigation shadowed area according to least one embodiment of the disclosure.
FIG. 6 is a sub flowchart of S230 according to least one embodiment of the disclosure.
FIG. 7 is a functional module of a control system of a 114426 mower according to least one embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

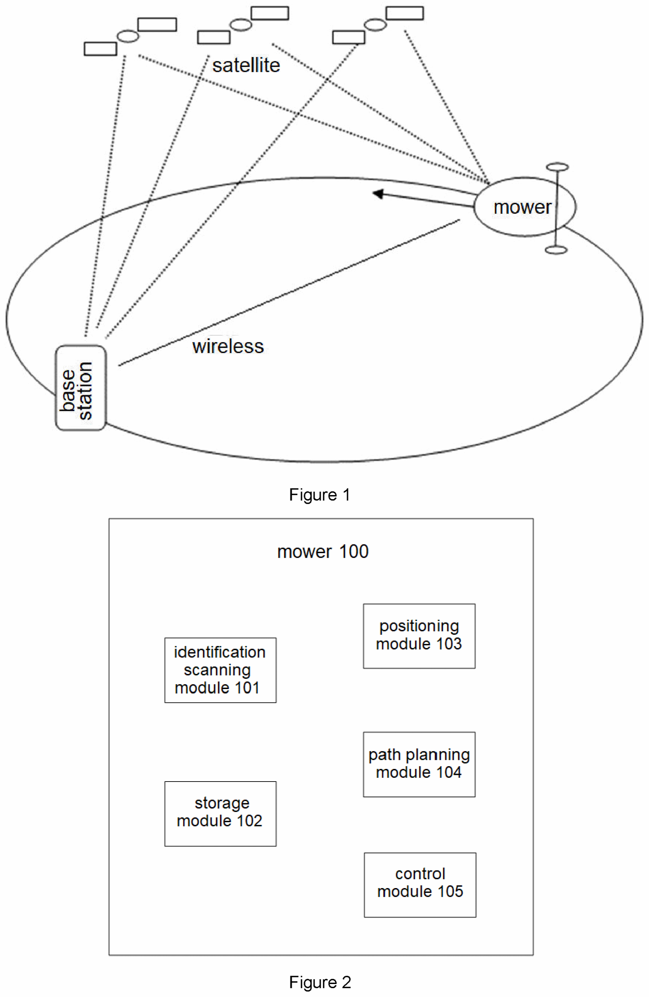

Please refer to FIG. 1 through FIG. 50. It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

In order to improve positioning accuracy, garden tools such as mowers, snow throwers, string trimmers, and hedge trimmers usually use RTK differential positioning technology as shown in FIG. 1 for positioning. RTK differential positioning technology is a real-time differential GPS technology based on carrier phase observation. It includes three parts: reference station receiver, data link, and rover receiver. Receivers of the carrier reference station and the rover continuously monitor a same satellite, and when the rover receives and observes visible satellite signals, the reference station sends a carrier phase measurement value to the rover receiver in real time through the data link. The rover receiver processes its own carrier phase measurement value and the received carrier phase measurement value in real time to calculate its own spatial coordinates and complete a high-accuracy positioning. A positioning accuracy of the carrier phase difference may reach a centimeter level. In FIG. 1, a base station is configured as a reference station, and a mower is configured as a rover. This disclosure will be described using the mower as an example.

Please refer to FIG. 2. The mower 100 includes an identification scanning module 101, a storage module 102, a positioning module 103, a path planning module 104 and a control module 105.

The identification scanning module 101 may identify objects in a working area and position information of the objects relative to the mower 100. The identification scanning module 101 may be a visual recognition module such as a camera, or a radar recognition module, and the radar recognition module may be a laser radar recognition module or a millimeter wave radar module. The storage module 102 is used to store a working area map of the mower 100 and related computer programs. The positioning module 103 can position the mower 100 based on satellite navigation signals. As an example, the positioning module 103 may position the mower 100 based on the RTK differential positioning technology as shown in FIG. 1. The path planning module 104 is used to plan a working path of the mower 100 in the working area according to the working area map of the mower 100. For the same working area map, path planning may be performed based on different traveling angles and working widths, thereby forming a working area map with different paths. The control module 105 is used to coordinate each module to work and control a movement of walking components of the mower 100 to perform moving operations based on navigation positioning information.

Some satellite navigation shadowed areas where satellite signals are poor or easily lost will be formed in the working area of the mowers due to obstructions such as buildings, roofs, sheds, trees, garden umbrellas, awnings, leaves, etc. in or near the working area. When the mowers enters the satellite navigation shadowed areas, the position of the mower cannot be reliably determined based on the positioning module 103 receiving the satellite signals, thereby affecting a normal operation of the mower in the satellite navigation shadowed areas.

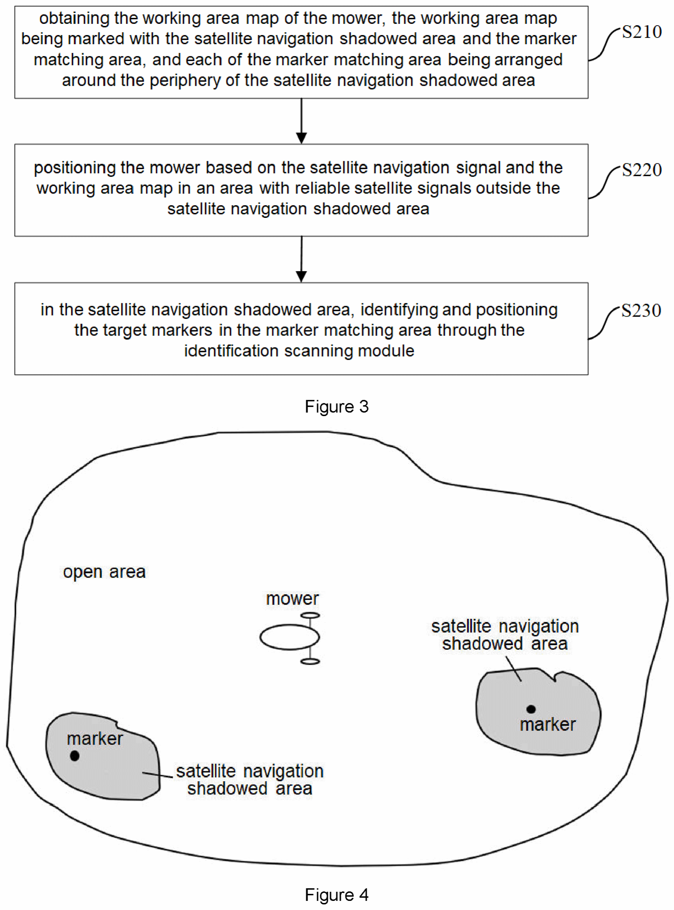

Since there are many markers in the working area map of the mower, when identifying a specific marker, it is necessary to traverse all the markers in the working area map for matching, which is inefficient. In addition, when the markers are similar, the positioning is inaccurate, which affects the positioning accuracy and efficiency. Therefore, please refer to FIG. 3. Another control method of the mower is provided.

Please refer to FIG. 3. The control method of the mower includes operations as follows.

First, execute S210: obtaining the working area map of the mower. The working area map is marked with the satellite navigation shadowed area and a marker matching area, and each of the marker matching area is arranged around a periphery of the satellite navigation shadowed area. -The target marker identified by the identification scanning module is arranged in the satellite navigation shadowed area, and an area of the marker matching area is greater than or equal to an area of the satellite navigation shadowed area.

There are many ways for the mower 100 to obtain the working area map. In an embodiment, the storage module 102 of the mower 100 stores the working area map, and the mower 100 may directly read the working area map from the storage module 102. In another embodiment, the mower 100 controls itself to move along the boundary wire of the working area, and uses the positioning module 103 to collect the real-time position coordinates of the mower 100 and store them in the storage module 102 as the working area map. The positioning module 103 is, for example, the global positioning module 103. In another embodiment, the mower 100 may also communicate with the external terminal through the communication module and receive the working area map sent by the external terminal.

Please refer to FIG. 4. In order to solve the problem of the accurate positioning of the mower 100 in the satellite navigation shadowed area, it is necessary to mark the satellite navigation shadowed area (the gray area in FIG. 4 represents the satellite navigation shadowed area) in the working area (an area defined by an outermost solid line in FIG. 4), and arrange the target markers (black dots in FIG. 4) that can be recognized by the radar recognition module in the satellite navigation shadowed area. Setting the target markers in the satellite navigation shadowed area can enable the target markers to be closer to the mower 100, which reduces the shielding of the target marker by other obstacles in the working area, and enables the mower 100 to accurately identify the target markers. Of course, the target markers may also be set in the area enclosed by a boundary of the marker matching area and a boundary of the satellite navigation shadowed area.

It should be noted that, in this embodiment, in order to accurately identify the target markers, the target markers needs to have specific target marker area that is different from other target markers in the marker matching area. The marker feature information of all target markers may be classified and stored in advance according to the marker matching area to which they belong. Therefore, the corresponding target marker can be accurately identified based on the specific marker feature information, which avoids misjudgment caused by other marker feature information in the working area and improves the positioning accuracy. For example, the target marker may be, for example, a combination of three markers arranged in the triangle, and the specific marker feature information that distinguishes the target markers from other target markers is formed by controlling a distance between the three markers.

When the satellite navigation shadowed area is marked in the working area, the mower 100 can be controlled to walk around the satellite navigation shadowed area in the working area to collect and save the position information of the satellite navigation shadowed area and mark it on the working area map, thereby dividing the working area into the open area and the satellite navigation shadowed area. The open area refers to the area with reliable satellite signals where the mower 100 can accurately position itself based on the satellite navigation signals.

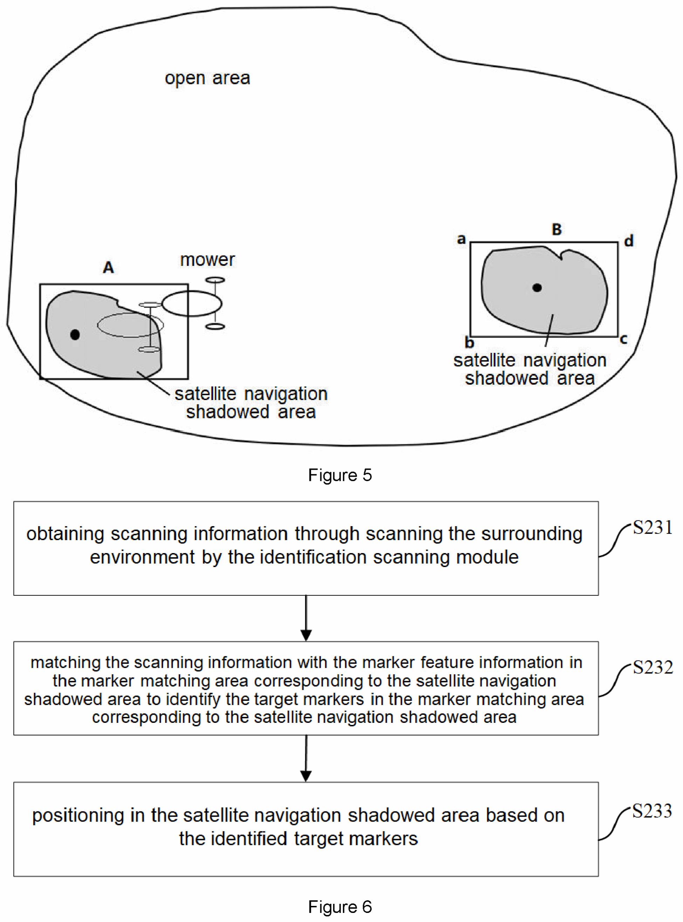

Please refer to FIG. 5. In a specific embodiment of the disclosure, the marker matching area is a rectangular marker matching area. Rectangular marker matching areas A and B are shown in FIG. 5. Taking the rectangular marker matching area B as an example, points a, b, c, and d are the four vertices of the rectangular marker matching area B. Points a, b, c, and d are all in areas with reliable satellite signals. The satellite navigation shadowed area is located in a middle of the rectangular marker matching area B. The mower 100 may sense whether itself has entered the rectangular marker matching area B by determining whether coordinates of the mower 100 are within a range of abcd. In other embodiments, the marker matching area may also be a circular marker matching area. Since the position of the satellite navigation shadowed area will change slightly based on a position of a satellite, in order to avoid affecting the positioning, the satellite navigation shadowed area is located in the marker matching area.

It should be noted that, FIG. 5 shows a condition where the working area includes two satellite navigation shadowed areas and two marker matching areas. However, in actual applications, if there are more satellite navigation shadowed areas and marker matching areas in the working area, there are also more target markers.

Then, execute S220: positioning the mower based on the satellite navigation signal and the working area map in an area with reliable satellite signals outside the satellite navigation shadowed area.

In the open area of the working area, the mower 100 utilizes the positioning module 103 to use kinematic differential positioning technology based on the received satellite navigation signal to control the mower 100 to move along the planned path.

In the open area with reliable satellite signals, the mower 100 may identify the target markers through the radar recognition module according to the marker feature information of the target markers, and obtain the positions and the distance data of the target markers relative to the mower 100. Since the position information of the mower 100 is known, the position information of the target marker may be calculated based on the positions and the distance data of the target markers relative to the mower 100, as well as the position information of the mower 100. It should be noted that, the position information of the target marker may be obtained each time the mowing operation is performed, or may be obtained during the first mowing operation and stored in the storage module 102 for subsequent use.

Execute S230: in the satellite navigation shadowed area, identifying and positioning the target markers in the marker matching area through the identification scanning module 101.

Please refer to FIG. 6. The mower moves to the satellite navigation shadowed area. In the satellite navigation shadowed area, when the target markers in the marker matching area are identified by the identification scanning module 101 for positioning, first, a surrounding environment of the mower is scanned by the identification scanning module 101 to obtain scanning information (S231). Then, the scanning information is matched with the marker feature information in the marker matching area corresponding to the satellite navigation shadowed area to identify the target markers in the marker matching area corresponding to the satellite navigation shadowed area (S232). Finally, the mower is positioned in the satellite navigation shadowed area based on the identified target markers (S233).

In an embodiment, when positioning the mower in the satellite navigation shadowed area based on the identified target markers, a second position and distance data of the identified target markers relative to the mower may be obtained and identified through the identification scanning module 101. The position of the mower in the satellite navigation shadowed area is estimated based on the second position and the second distance data of the identified target markers relative to the mower and the position information of the target markers, so as to position the mower in the satellite navigation shadowed area.

Please refer to FIG. 5. During the operation of the mower 100, the mower 100 may calculate through the satellite navigation signal that the mower 100 has entered the rectangular marker matching area A. When the mower 100 continues to move and enters the satellite navigation shadowed area in the rectangular marker matching area A, the mower 100 cannot obtain its own position through the satellite navigation signal due to a loss of the satellite navigation signal. At this time, the target markers may be collected by the radar recognition module (or other identification scanning modules such as the visual recognition module), and there is no need to match the markers (all the markers in the rectangular marker matching areas A and B in FIG. 5) in an entire map. Only the target markers in the rectangular marker matching area A need to be matched, which reduces an amount of calculation and improves the positioning efficiency. The more markers there are in the working area map, the more obvious the effect is.

After the target markers in the rectangular marker matching area A are identified by the radar recognition module, the second position and the second distance data of the target markers relative to the mower 100 may be obtained, so that the position of the mower 100 in the satellite navigation shadowed area can be estimated based on the second position and the second distance data of the target markers relative to the mower 100 and the position information of the target markers, so as to position the mower 100 in the satellite navigation shadowed area.

In another specific embodiment, after the mower enters the marker matching area, the mower enters a ready state, calls the stored information, obtains the position information of the target markers in the marker matching area, and compares the position information with its current position, thereby obtaining relative positions of the target markers in the marker matching area. When the mower moves further and enters the satellite navigation shadowed area, predicted positions of the target markers are obtained based on the relative position of the target marker, a moving direction and a speed of the garden tool, so as to track and identify the target markers, and perform the positioning based on the target markers.

Please refer to FIG. 5. After the mower enters the rectangular marker matching area A, the mower enters the ready state, calls the stored information, obtains the position information of the target markers in the rectangular marker matching area A, and compares the position information with its current position, thereby obtaining relative positions of the target markers. When the mower 100 moves further and enters the satellite navigation shadowed area, the predicted position of the target markers may be obtained based on the relative position of the determined target markers, the moving direction and the speed of the mower, and a preset range on two sides of the predicted position may be scanned by the identification scanning module to obtain scanning information. The scanning information is matched with the marker feature information in the marker matching area to identify the target markers in the satellite navigation shadowed area. Based on the identified target markers, the mower is navigated and positioned in the satellite navigation shadowed area, thereby avoiding the mower from scanning the target markers over a large range, which reduces a scanning time, and further improves the positioning efficiency and the positioning accuracy of the mower 100.

The satellite navigation shadowed area and the marker matching area are marked in the working area map of the mower 100, and the marker matching area is set around the periphery of the satellite navigation shadowed area. In the area with reliable satellite signals outside the satellite navigation shadowed area, the mower 100 is positioned based on the satellite navigation signal and the working area map. In the satellite navigation shadowed area, the target markers in the marker matching area are identified by the identification scanning module 101 for positioning. By setting the marker matching area, a matching area when identifying the target marker can be narrowed, the amount of calculation can be reduced, and the positioning accuracy and the efficiency can be improved.

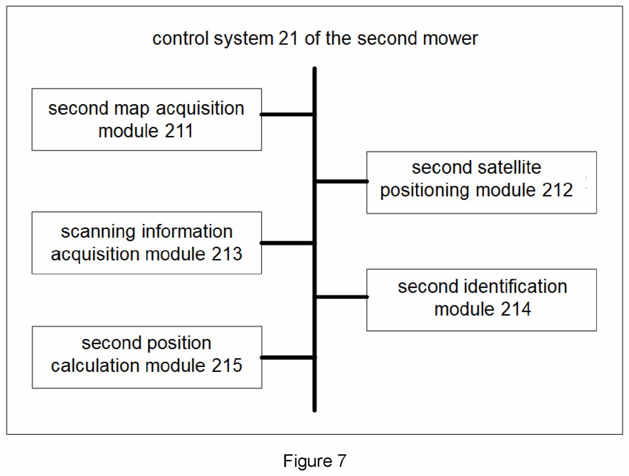

FIG. 7 is a functional module of a control system of a mower according to an embodiment of the disclosure. Please refer to FIG. 7. The control system 21 of the mower includes a second map acquisition module 211, a second satellite positioning module 212 and a second shadowed area positioning module.

The second map acquisition module 211 is used to obtain the working area map of the mower. The satellite navigation shadowed area is marked in the working area map, and the target markers identified by an identification scanning module are arranged in the satellite navigation shadowed area. The working area map is further marked with the marker matching area, and each of the marker matching area is arranged around the periphery of the satellite navigation shadowed area.

The second satellite positioning module 212 is configured to position the mower based on the satellite navigation signal and the working area map in the area with reliable satellite signals outside the satellite navigation shadowed area.

The second shadowed area positioning module is configured to position the garden tool through identifying the target markers in the marker matching area through the identification scanning module 101 in the satellite navigation shadowed area. In an embodiment, the second shadowed area positioning module includes a scanning information acquisition module 213, a second identification module 214 and a second position calculation module 215. The scanning information acquisition module 213 is used to scan the surrounding environment of the mower by the identification scanning module 101 to obtain scanning information. The second identification module 214 is used to match the scanning information with the marker feature information in the marker matching area corresponding to the satellite navigation shadowed area to identify the target markers in the marker matching area corresponding to the satellite navigation shadowed area. The second position calculation module 215 is used to position the mower in the satellite navigation shadowed area based on the identified target markers.

It should be noted that, the control system 21 of the mower of this embodiment is the system corresponding to the above control method of the mower, and the functional modules in the control system 21 of the mower correspond to the corresponding operations in the control method of the mower respectively. The control system 21 of the mower of this embodiment may be implemented in cooperation with the control method of the mower. Correspondingly, relevant technical details mentioned in the control system 21 of the mower in this embodiment may also be applied to the above control method of the mower.

It is obvious to those skilled in the art that the present invention is not limited to the details of the above-described exemplary embodiments, and that the present inventioncan be implemented in other specific and is only limited by the appending claims.

## Claims

1. A control method of a garden tool, comprising:
obtaining (S110) a working area map of the garden tool, the working area map including a satellite navigation shadowed area, a marker matching area and a target marker, arranged in the satellite navigation shadowed area and provided with marker feauture information identifiable by an identification scanning module (101), wherein the marker matching area is arranged around a periphery of the satellite navigation shadowed area;
positioning of the garden tool based on a satellite navigation signal and the working area map when the garden tool is in an area with reliable satellite signals outside the satellite navigation shadowed area; and
shadowed area positioning of the garden tool through identifying the marker feature information of the target marker in the satellite navigation shadowed area through the identification scanning module (101) when the garden tool enters the marker matching area.

2. The control method of the garden tool according to claim 1, wherein a plurality of the target markers being identified by the identification scanning module (101) are arranged in the satellite navigation shadowed area, and the plurality of the target markers are arranged according to a preset position relationship;
shadowed area positioning of the garden tool through identifying each target marker in the satellite navigation shadowed area through the identification scanning module (101) when the garden tool is in the satellite navigation shadowed area comprising:
when the garden tool enters the satellite navigation shadowed area, based on the preset position relationship, identifying each target marker by the identification scanning module (101) to obtain a first position and first distance data of each target marker relative to the garden tool; and
calculating (S140) position information of the garden tool according to the first position and the first distance data of each target marker relative to the garden tool and according to the position information of the target marker to position the garden tool in the satellite navigation shadowed area.

3. The control method of the garden tool according to claim 2, wherein, when the garden tool enters the satellite navigation shadowed area, based on the preset position relationship, identifying each target marker by the identification scanning module (101) to obtain a first position and first distance data of each target marker relative to the garden tool comprising:
obtaining first positions and first distance data of a plurality of obstacles comprising a respective target marker relative to the garden tool through the identification scanning module;
calculating a position relationship between the obstacles according to the first positions and the first distance data of the plurality of the obstacles relative to the garden tool; and
based on the position relationship between the obstacles, searching for several obstacles satisfying the preset position relationship from the plurality of the obstacles as the target markers.

4. The control method of the garden tool according to claim 2, wherein, three target markers identified by the identification scanning module (101) are arranged in the satellite navigation shadowed area, the three target markers are arranged in a triangle, and the preset position relationship refers to a distance between any two of the target markers.

5. The control method of the garden tool according to claim 1, wherein, positioning the garden tool in the satellite navigation shadowed area based on the identified target marker comprising:
obtaining a second position and second distance data of the identified target marker relative to the garden tool through the identification scanning module; and
estimating a position of the garden tool in the satellite navigation shadowed area based on the second position and second distance data of the identified target marker relative to the garden tool and based on position information of the identified target marker to achieve a positioning of the garden tool in the satellite navigation shadowed area.

6. The control method of the garden tool according to claim 1, wherein, the marker matching area is a rectangular marker matching area or a circular marker matching area.

7. The control method of the garden tool according to claim 1, further comprising:
when the garden tool enters the marker matching area, the garden tool entering a ready state;
the garden tool obtaining a relative position of the target marker based on the position information of the target marker in the marker matching area and based on position information of the garden tool;
when the garden tool moves further and enters the satellite navigation shadowed area in the marker matching area, obtaining a predicted position of the target marker based on the relative position of the target marker and based on a moving direction and a speed of the garden tool;
scanning a preset range on two sides of the predicted position through the identification scanning module (101) to obtain the scanning information;
matching the scanning information with the marker feature information in the marker matching area to identify the target marker in the satellite navigation shadowed area; and
positioning the garden tool in the satellite navigation shadowed area based on the identified target marker.

8. The control method of the garden tool according to claim 1, further comprising:
based on the working area map, controlling the garden tool to walk around an edge of the satellite shadowed area, collecting and saving position information of the satellite navigation shadowed area, and identifying the satellite shadowed area in the working area map.

9. The control method of the garden tool according to claim 1, wherein, in the area with reliable satellite signals outside the satellite navigation shadowed area, positioning the garden tool based on the satellite navigation signal and the working area map comprising:
in the area with reliable satellite signals outside the satellite navigation shadowed area, controlling a movement of the garden tool based on a real-time kinematic differential positioning signal and the working area map.

10. The control method of the garden tool according to claim 1, further comprising:
in the area with reliable satellite signals outside the satellite navigation shadowed area, identifying the target marker through the identification scanning module (101) to obtain a third position and third distance data of the target marker relative to the garden tool; and
calculating position information of the target marker according to the third position and the third distance data of the target marker relative to the garden tool and according to position information of the garden tool.

11. The control method of the garden tool according to claim 1, wherein, the identification scanning module (101) comprises a visual recognition module or a radar recognition module, and the radar recognition module comprises a laser radar recognition module or a millimeter wave radar module.

12. The control method of the garden tool according to claim 1, wherein, the garden tool comprises mowers or snow throwers.

13. A control system (11; 21) of a garden tool, comprising:
a map acquisition module (111; 211),
a satellite positioning module (112; 212), and a shadowed area positioning module, wherein the control system is configured to execute the control method according any one of the preceding claims.

14. A garden tool, comprising:
a storage module (102) configured to store a working area map of the garden tool;
a positioning module (103) configured to position the garden tool based on a satellite navigation signal;
an identification scanning module (101), configured to recognize a target marker and obtain a position and a distance of the target marker relative to the garden tool; and
a control module (105) configured to execute the control method according to any one of claims 1 to 12

## Patentansprüche

1. Steuerungsverfahren eines Gartenwerkzeugs, umfassend:
Erhalten (S110) einer Arbeitsbereichskarte des Gartenwerkzeugs, wobei die Arbeitsbereichskarte einen satellitennavigationsverschatteten Bereich, einen Marker-Abgleichsbereich und einen Zielmarker umfasst, der im satellitennavigationsverschatteten Bereich angeordnet ist und Markermerkmalinformationen aufweist, die von einem Identifikations-Scanmodul (101) identifizierbar sind, wobei der Marker-Abgleichsbereich um den Rand des satellitennavigationsverschatteten Bereichs angeordnet ist;
Positionieren des Gartenwerkzeugs auf Grundlage eines Satellitennavigationssignals und der Arbeitsbereichskarte, wenn sich das Gartenwerkzeug in einem Bereich mit zuverlässigem Satellitensignal außerhalb des satellitennavigationsverschatteten Bereichs befindet; und
Positionieren des Gartenwerkzeugs im satellitennavigationsverschatteten Bereich durch Identifizieren der Markermerkmalinformationen des Zielmarkers im satellitennavigationsverschatteten Bereich mittels des Identifikations-Scanmoduls (101), wenn das Gartenwerkzeug in den Marker-Abgleichsbereich eintritt.

2. Steuerungsverfahren des Gartenwerkzeugs nach Anspruch 1, wobei eine Vielzahl von Zielmarkern, die durch das Identifikations-Scanmodul (101) identifizierbar sind, im satellitennavigationsverschatteten Bereich angeordnet sind, und wobei die Vielzahl von Zielmarkern gemäß einer vorgegebenen Positionsbeziehung angeordnet ist;
Positionieren des Gartenwerkzeugs im satellitennavigationsverschatteten Bereich durch Identifizieren jedes Zielmarkers im satellitennavigationsverschatteten Bereich mittels des Identifikations-Scanmoduls (101), wenn sich das Gartenwerkzeug im satellitennavigationsverschatteten Bereich befindet, umfassend:
Identifizieren jedes Zielmarkers durch das Identifikations-Scanmodul (101), wenn das Gartenwerkzeug in den satellitennavigationsverschatteten Bereich eintritt, auf Grundlage der vorgegebenen Positionsbeziehung, um erste Positions- und Abstandsdaten jedes Zielmarkers relativ zum Gartenwerkzeug zu erhalten; und
Berechnen (S140) von Positionsinformationen des Gartenwerkzeugs auf Grundlage der ersten Positions- und Abstandsdaten jedes Zielmarkers relativ zum Gartenwerkzeug und auf Grundlage der Positionsinformationen der Zielmarker, um das Gartenwerkzeug im satellitennavigationsverschatteten Bereich zu positionieren.

3. Steuerungsverfahren des Gartenwerkzeugs nach Anspruch 2, wobei, wenn das Gartenwerkzeug in den satellitennavigationsverschatteten Bereich eintritt, auf Grundlage der vorgegebenen Positionsbeziehung Identifizieren jedes Zielmarkers durch das Identifikations-Scanmodul (101), um erste Positions- und Abstandsdaten jedes Zielmarkers relativ zum Gartenwerkzeug zu erhalten, umfassend:
Erhalten erster Positions- und Abstandsdaten einer Vielzahl von Hindernissen, die jeweils einen Zielmarker umfassen, relativ zum Gartenwerkzeug mittels des Identifikations-Scanmoduls;
Berechnen einer Positionsbeziehung zwischen den Hindernissen auf Grundlage der ersten Positions- und Abstandsdaten der Vielzahl von Hindernissen relativ zum Gartenwerkzeug; und
Suchen mehrerer Hindernisse aus der Vielzahl von Hindernissen als Zielmarker auf Grundlage der Positionsbeziehung zwischen den Hindernissen, die die vorgegebene Positionsbeziehung erfüllen.

4. Steuerungsverfahren des Gartenwerkzeugs nach Anspruch 2, wobei drei durch das Identifikations-Scanmodul (101) identifizierte Zielmarker im satellitennavigationsverschatteten Bereich angeordnet sind, die drei Zielmarker in Form eines Dreiecks angeordnet sind und sich die vorgegebene Positionsbeziehung auf einen Abstand zwischen jeweils zwei der Zielmarker bezieht.

5. Steuerungsverfahren des Gartenwerkzeugs nach Anspruch 1, wobei das Positionieren des Gartenwerkzeugs im satellitennavigationsverschatteten Bereich auf Grundlage des identifizierten Zielmarkers umfasst:
Erhalten einer zweiten Positions- und zweiter Abstandsdaten des identifizierten Zielmarkers relativ zum Gartenwerkzeug mittels des Identifikations-Scanmoduls; und
Schätzen einer Position des Gartenwerkzeugs im satellitennavigationsverschatteten Bereich auf Grundlage der zweiten Positions- und Abstandsdaten des identifizierten Zielmarkers relativ zum Gartenwerkzeug sowie auf Grundlage der Positionsinformationen des identifizierten Zielmarkers, um eine Positionierung des Gartenwerkzeugs im satellitennavigationsverschatteten Bereich zu erreichen.

6. Steuerungsverfahren des Gartenwerkzeugs nach Anspruch 1, wobei der Marker-Abgleichsbereich ein rechteckiger Marker-Abgleichsbereich oder ein kreisförmiger Marker-Abgleichsbereich ist.

7. Steuerungsverfahren des Gartenwerkzeugs nach Anspruch 1, weiter umfassend:
Übergehen des Gartenwerkzeugs in einen Bereitschaftszustand, wenn das Gartenwerkzeug in den Marker-Abgleichsbereich eintritt;
Erhalten einer relativen Position des Zielmarkers auf Grundlage der Positionsinformationen des Zielmarkers im Marker-Abgleichsbereich und der Positionsinformationen des Gartenwerkzeugs;
Erhalten einer vorhergesagten Position des Zielmarkers auf Grundlage der relativen Position des Zielmarkers und einer Bewegungsrichtung und einer Geschwindigkeit des Gartenwerkzeugs, wenn sich das Gartenwerkzeug weiter bewegt und in den satellitennavigationsverschatteten Bereich innerhalb des Marker-Abgleichsbereichs eintritt;
Scannen eines vorgegebenen Bereichs auf beiden Seiten der vorhergesagten Position mittels des Identifikations-Scanmoduls (101), um Scaninformationen zu erhalten;
Abgleichen der Scaninformationen mit den Markermerkmalinformationen im Marker-Abgleichsbereich, um den Zielmarker im satellitennavigationsverschatteten Bereich zu identifizieren; und
Positionieren des Gartenwerkzeugs im satellitennavigationsverschatteten Bereich auf Grundlage des identifizierten Zielmarkers.

8. Steuerungsverfahren des Gartenwerkzeugs nach Anspruch 1, weiter umfassend:
Steuern des Gartenwerkzeugs auf Grundlage der Arbeitsbereichskarte zum Umlaufen eines Randes des satellitennavigationsverschatteten Bereichs, Erfassen und Speichern von Positionsinformationen des satellitennavigationsverschatteten Bereichs und Identifizieren des satellitennavigationsverschatteten Bereichs in der Arbeitsbereichskarte.

9. Steuerungsverfahren des Gartenwerkzeugs nach Anspruch 1, wobei in dem Bereich mit zuverlässigem Satellitensignal außerhalb des satellitennavigationsverschatteten Bereichs das Positionieren des Gartenwerkzeugs auf Grundlage des Satellitennavigationssignals und der Arbeitsbereichskarte umfasst:
Steuern einer Bewegung des Gartenwerkzeugs in einem Bereich mit zuverlässigem Satellitensignal außerhalb des satellitennavigationsverschatteten Bereichs auf Grundlage eines Echtzeit-Kinematik-Differenzpositionierungssignals und der Arbeitsbereichskarte.

10. Steuerungsverfahren des Gartenwerkzeugs nach Anspruch 1, weiter umfassend:
Identifizieren des Zielmarkers mittels des Identifikations-Scanmoduls (101) in einem Bereich mit zuverlässigem Satellitensignal außerhalb des satellitennavigationsverschatteten Bereichs, um dritte Positions- und Abstandsdaten des Zielmarkers relativ zum Gartenwerkzeug zu erhalten; und
Berechnen von Positionsinformationen des Zielmarkers auf Grundlage der dritten Positions- und Abstandsdaten des Zielmarkers relativ zum Gartenwerkzeug sowie auf Grundlage der Positionsinformationen des Gartenwerkzeugs.

11. Steuerungsverfahren des Gartenwerkzeugs nach Anspruch 1, wobei das Identifikations-Scanmodul (101) ein visuelles Erkennungsmodul oder ein Radarerkennungsmodul umfasst und das Radarerkennungsmodul ein Laserradarerkennungsmodul oder ein Millimeterwellenradarmodul umfasst.

12. Steuerungsverfahren des Gartenwerkzeugs nach Anspruch 1, wobei das Gartenwerkzeug Rasenmäher oder Schneefräsen umfasst.

13. Steuerungssystem (11; 21) eines Gartenwerkzeugs, umfassend:
ein Kartenerfassungsmodul (111; 211),
ein Satellitenpositionsmodul (112; 212) und ein Verschattungsbereichs-Positionierungsmodul, wobei das Steuerungssystem dazu eingerichtet ist, das Steuerungsverfahren nach einem der vorstehenden Ansprüche auszuführen.

14. Gartenwerkzeug, umfassend:
ein Speichermodul (102), das so konfiguriert ist, dass es eine Arbeitsbereichskarte des Gartenwerkzeugs speichert;
ein Positionierungsmodul (103), das so konfiguriert ist, dass es das Gartenwerkzeug auf Grundlage eines Satellitennavigationssignals positioniert;
ein Identifikations-Scanmodul (101), das so konfiguriert ist, dass es einen Zielmarker erkennt und eine Position und einen Abstand des Zielmarkers relativ zum Gartenwerkzeug ermittelt; und
ein Steuermodul (105), das so konfiguriert ist, dass es das Steuerungsverfahren nach einem der Ansprüche 1 bis 12 ausführt.

## Revendications

1. Procédé de commande d'un outil de jardinage, comprenant :
l'obtention (S110) d'une carte de zone de travail de l'outil de jardinage, la carte de zone de travail incluant une zone d'ombre de navigation par satellite, une zone de mise en correspondance de marqueurs et un marqueur cible, agencé dans la zone d'ombre de navigation par satellite et muni d'informations de caractéristiques de marqueur identifiables par un module (101) de balayage d'identification, dans lequel la zone de mise en correspondance de marqueurs est agencée autour d'une périphérie de la zone d'ombre de navigation par satellite ;
le positionnement de l'outil de jardinage sur la base d'un signal de navigation par satellite et de la carte de zone de travail lorsque l'outil de jardinage est dans une zone avec des signaux satellites fiables en dehors de la zone d'ombre de navigation par satellite ; et
le positionnement en zone d'ombre de l'outil de jardinage en identifiant les informations de caractéristiques de marqueur du marqueur cible dans la zone d'ombre de navigation par satellite au moyen du module (101) de balayage d'identification lorsque l'outil de jardinage entre dans la zone de mise en correspondance de marqueurs.

2. Procédé de commande de l'outil de jardinage selon la revendication 1, dans lequel une pluralité des marqueurs cibles étant identifiés par le module (101) de balayage d'identification sont agencés dans la zone d'ombre de navigation par satellite, et la pluralité des marqueurs cibles sont agencés selon une relation de position prédéfinie ;
le positionnement en zone d'ombre de l'outil de jardinage en identifiant chaque marqueur cible dans la zone d'ombre de navigation par satellite au moyen du module (101) de balayage d'identification lorsque l'outil de jardinage est dans la zone d'ombre de navigation par satellite comprenant :
lorsque l'outil de jardinage entre dans la zone d'ombre de navigation par satellite, sur la base de la relation de position prédéfinie, l'identification de chaque marqueur cible par le module (101) de balayage d'identification afin d'obtenir une première position et de premières données de distance de chaque marqueur cible par rapport à l'outil de jardinage ; et
le calcul (S140) d'informations de position de l'outil de jardinage selon la première position et les premières données de distance de chaque marqueur cible par rapport à l'outil de jardinage et selon les informations de position du marqueur cible afin de positionner l'outil de jardinage dans la zone d'ombre de navigation par satellite.

3. Procédé de commande de l'outil de jardinage selon la revendication 2, dans lequel, lorsque l'outil de jardinage entre dans la zone d'ombre de navigation par satellite, sur la base de la relation de position prédéfinie, l'identification de chaque marqueur cible par le module (101) de balayage d'identification afin d'obtenir une première position et de premières données de distance de chaque marqueur cible par rapport à l'outil de jardinage comprend :
l'obtention de premières positions et de premières données de distance d'une pluralité d'obstacles comprenant un marqueur cible respectif par rapport à l'outil de jardinage au moyen du module de balayage d'identification ;
le calcul d'une relation de position entre les obstacles selon les premières positions et les premières données de distance de la pluralité des obstacles par rapport à l'outil de jardinage ; et
sur la base de la relation de position entre les obstacles, la recherche de plusieurs obstacles satisfaisant la relation de position prédéfinie à partir de la pluralité des obstacles en tant que marqueurs cibles.

4. Procédé de commande de l'outil de jardinage selon la revendication 2, dans lequel trois marqueurs cibles identifiés par le module (101) de balayage d'identification sont agencés dans la zone d'ombre de navigation par satellite, les trois marqueurs cibles sont agencés en un triangle, et la relation de position prédéfinie se rapporte à une distance entre deux quelconques des marqueurs cibles.

5. Procédé de commande de l'outil de jardinage selon la revendication 1, dans lequel le positionnement de l'outil de jardinage dans la zone d'ombre de navigation par satellite sur la base du marqueur cible identifié comprend :
l'obtention d'une deuxième position et de deuxièmes données de distance du marqueur cible identifié par rapport à l'outil de jardinage au moyen du module de balayage d'identification ; et
l'estimation d'une position de l'outil de jardinage dans la zone d'ombre de navigation par satellite sur la base de la deuxième position et de deuxièmes données de distance du marqueur cible identifié par rapport à l'outil de jardinage et sur la base d'informations de position du marqueur cible identifié afin de réaliser un positionnement de l'outil de jardinage dans la zone d'ombre de navigation par satellite.

6. Procédé de commande de l'outil de jardinage selon la revendication 1, dans lequel la zone de mise en correspondance de marqueurs est une zone de mise en correspondance de marqueurs rectangulaire ou une zone de mise en correspondance de marqueurs circulaire.

7. Procédé de commande de l'outil de jardinage selon la revendication 1, comprenant en outre :
lorsque l'outil de jardinage entre dans la zone de mise en correspondance de marqueurs, l'outil de jardinage passe dans un état prêt ;
l'outil de jardinage obtenant une position relative du marqueur cible sur la base des informations de position du marqueur cible dans la zone de mise en correspondance de marqueurs et sur la base d'informations de position de l'outil de jardinage ;
lorsque l'outil de jardinage se déplace davantage et entre dans la zone d'ombre de navigation par satellite dans la zone de mise en correspondance de marqueurs, l'obtention d'une position prédite du marqueur cible sur la base de la position relative du marqueur cible et sur la base d'une direction de déplacement et d'une vitesse de l'outil de jardinage ;
le balayage d'une plage prédéfinie sur deux côtés de la position prédite au moyen du module (101) de balayage d'identification afin d'obtenir les informations de balayage ;
la mise en correspondance des informations de balayage avec les informations de caractéristiques de marqueur dans la zone de mise en correspondance de marqueurs afin d'identifier le marqueur cible dans la zone d'ombre de navigation par satellite ; et
le positionnement de l'outil de jardinage dans la zone d'ombre de navigation par satellite sur la base du marqueur cible identifié.

8. Procédé de commande de l'outil de jardinage selon la revendication 1, comprenant en outre :
sur la base de la carte de zone de travail, la commande de l'outil de jardinage de sorte qu'il se déplace autour d'un bord de la zone d'ombre de navigation par satellite, la collecte et la sauvegarde d'informations de position de la zone d'ombre de navigation par satellite, et l'identification de la zone d'ombre de navigation par satellite dans la carte de zone de travail.

9. Procédé de commande de l'outil de jardinage selon la revendication 1, dans lequel, dans la zone avec des signaux satellites fiables en dehors de la zone d'ombre de navigation par satellite, le positionnement de l'outil de jardinage sur la base du signal de navigation par satellite et de la carte de zone de travail comprend :
dans la zone avec des signaux satellites fiables en dehors de la zone d'ombre de navigation par satellite, la commande d'un déplacement de l'outil de jardinage sur la base d'un signal de positionnement différentiel cinématique en temps réel et de la carte de zone de travail.

10. Procédé de commande de l'outil de jardinage selon la revendication 1, comprenant en outre :
dans la zone avec des signaux satellites fiables en dehors de la zone d'ombre de navigation par satellite, l'identification du marqueur cible au moyen du module (101) de balayage d'identification afin d'obtenir une troisième position et de troisièmes données de distance du marqueur cible par rapport à l'outil de jardinage ; et
le calcul d'informations de position du marqueur cible selon la troisième position et les troisièmes données de distance du marqueur cible par rapport à l'outil de jardinage et selon des informations de position de l'outil de jardinage.

11. Procédé de commande de l'outil de jardinage selon la revendication 1, dans lequel le module (101) de balayage d'identification comprend un module de reconnaissance visuelle ou un module de reconnaissance radar, et le module de reconnaissance radar comprend un module de reconnaissance radar laser ou un module de radar à ondes millimétriques.

12. Procédé de commande de l'outil de jardinage selon la revendication 1, dans lequel l'outil de jardinage comprend des tondeuses ou des souffleuses à neige.

13. Système (11 ; 21) de commande d'un outil de jardinage, comprenant :
un module (111 ; 211) d'acquisition de carte,
un module (112 ; 212) de positionnement par satellite, et un module de positionnement en zone d'ombre, dans lequel le système de commande est configuré pour exécuter le procédé de commande selon l'une quelconque des revendications précédentes.

14. Outil de jardinage, comprenant :
un module (102) de stockage configuré pour stocker une carte de zone de travail de l'outil de jardinage ;
un module (103) de positionnement configuré pour positionner l'outil de jardinage sur la base d'un signal de navigation par satellite ;
un module (101) de balayage d'identification, configuré pour reconnaître un marqueur cible et obtenir une position et une distance du marqueur cible par rapport à l'outil de jardinage ; et
un module (105) de commande configuré pour exécuter le procédé de commande selon l'une quelconque des revendications 1 à 12.
